(19) Europäisches Patentamt
European Patent Office
Office européen des brevets

(11) **EP 4 775 858 A1**

(12) **EUROPEAN PATENT APPLICATION**
published in accordance with Art. 153(4) EPC

(43) Date of publication:
**15.07.2026 Bulletin 2026/29**

(21) Application number: **24862622.8**

(22) Date of filing: **23.08.2024**

(51) International Patent Classification (IPC):
**F16K 17/40** (2006.01)      **F17C 13/12** (2006.01)

(52) Cooperative Patent Classification (CPC):
**F16K 17/40; F17C 13/12**

(86) International application number:
**PCT/JP2024/030111**

(87) International publication number:
**WO 2025/052970 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.09.2023   JP 2023145693**

(71) Applicant: **Nippon Kayaku Kabushiki Kaisha
Tokyo 100-0005 (JP)**

(72) Inventors:
• **SASAMOTO, Kouichi
  Himeji-shi, Hyogo 679-2123 (JP)**
• **IWASAKI, Koju
  Himeji-shi, Hyogo 679-2123 (JP)**

(74) Representative: **Gille Hrabal
Partnerschaftsgesellschaft mbB
Patentanwälte
Brucknerstraße 20
40593 Düsseldorf (DE)**

(54) **SAFETY VALVE FOR HIGH-PRESSURE TANK**

(57)     Provided is a safety valve in which a gas is not ignited at the time of ignition of explosive for activating the valve.

A safety valve 30 includes a main body 31 and an igniter 34. The main body 31 includes a region 31A in which a male thread is threaded, an internal space 31B in which the igniter 34 is provided, a hole portion 31C communicating with a space 10a of a tank main body 10, an openable portion 32 which is a bottom portion of the hole portion 31C and is opened by ignition of the igniter 34, and a discharge port 33 for discharging a gas at the time of activation. A fixing member 36 is provided with a cylindrical member 42, a pore portion 42a is formed in a bottom portion of the cylindrical member 42, and an O-ring 43 is provided in the middle of an inner wall of the pore portion 42a. Inside the cylindrical member 42, a piston member 44 is provided in which the tip portion of a rod-shaped portion 44a penetrates the pore portion 42a. The piston member 44 includes a recessed receiving portion 44b that receives the flame of the igniter 34. A space between the inner wall of the cylindrical member 42 and the surface of the piston member 44 is filled with a heat reducing flame extinguishing agent 45.

FIG. 2

EP 4 775 858 A1

# EP 4 775 858 A1

**Description**

TECHNICAL FIELD

The present invention relates to a safety valve for a high-pressure tank.

BACKGROUND ART

Some high-pressure tanks containing compressed gas and the like (gas cylinders) are equipped with a safety valve having a structure in which a fusible plug is melted and opened when the ambient temperature abnormally rises for some reason (also referred to as a fusible plug valve). For example, when the temperature of the high-pressure tank abnormally rises due to a fire or the like, it is possible to prevent the high-pressure tank from bursting due to the activation of the safety valve.

CITATIONS LIST

PATENT LITERATURE

Patent Literature 1: JP 5007809 B1

SUMMARY OF INVENTION

TECHNICAL PROBLEMS

In the safety valve (fusible plug valve) of Patent Literature 1, when applied to a high-pressure tank of a combustible gas (for example, hydrogen gas or the like), it takes time until the fusible plug is completely melted. Therefore, in order to activate the safety valve early, it is advantageous to activate the safety valve using explosive as a driving source. However, when applied to a high-pressure tank of a combustible gas (for example, hydrogen gas or the like), there is a concern that the combustible gas may be ignited.

Therefore, an object of the present invention is to provide a safety valve that activates early and can use ignition means as a driving force without igniting the combustion gas.

SOLUTIONS TO PROBLEMS

(1) The present invention provides a safety valve for a high-pressure tank that can be connected to an opening of a tank main body filled with a fluid, the safety valve including a main body having a discharge port that comes into contact with an external environment, and a flow path capable of communicating the opening and the external environment via the discharge port; and a valve that is provided at any position of the flow path, closes the flow path at a normal time, and opens the flow path at an abnormally high temperature or abnormality detection, in which the valve has an openable portion that is opened by driving of opening means provided in the flow path, the opening means is provided on the downstream side of the openable portion in the flow path and opens the openable portion using energy obtained by ignition of explosive as a drive source, and the valve is provided with flame-extinguishing means against a flame generated by the ignition of explosive when the opening means is driven.

(2) In the safety valve for a high-pressure tank of the above (1), it is preferred that the explosive in the opening means is an igniter that activates when a current flows or an auto-ignition agent that automatically ignites at a predetermined temperature or higher, and the flame-extinguishing means is a flame extinguishing agent or a flame extinguishing member that extinguishes a flame generated at the time of activating the igniter or the auto-ignition agent, the safety valve further including: a cylindrical member in which the igniter or the auto-ignition agent is disposed on one end side and a bottom portion in which a pore portion is formed is provided on the other end side; and a piston member at least a part of which is provided inside the cylindrical member, the piston member that is provided in a state of penetrating the pore portion in an initial state, and is slid in a penetrating direction of the pore portion by a pressure wave obtained by ignition of the igniter or automatic ignition of the auto-ignition agent when the igniter or the auto-ignition agent activates to open the openable portion, and the flame-extinguishing means is provided at least partially between an inner wall of the cylindrical member and the piston in the cylindrical member. The term "explosive" as used herein refers to an explosive composition such as an ignition charge, a firing charge, an AI agent, or a gas generating agent, or a pyrotechnic in which the explosive composition is incorporated into an igniter or a gas generator.

(3) As another point of view, in the safety valve for a high-pressure tank of the above (1), the explosive in the opening means is an igniter that activates when a current flows or an auto-ignition agent that automatically ignites at a predetermined temperature or higher, and the flame-extinguishing means is a flame extinguishing agent or a flame extinguishing member that extinguishes a flame generated at the time of activating the igniter or the auto-ignition agent, the safety valve further including: a cylindrical member in which the igniter or the auto-ignition agent is disposed on one end side and having a bottom portion on the other end side; and a piston member that is provided inside the cylindrical member, and is slid to the other end side of the cylindrical member by a pressure wave obtained by ignition of the igniter or automatic ignition of the auto-ignition agent when the igniter or the auto-ignition agent activates to sequentially open the bottom portion of the cylindrical member and the openable portion, and the flame-extinguishing means may be provided at least partially between an inner wall of the cylindrical member and the piston in the cylindrical member.

(4) As another point of view, in the safety valve for a high-pressure tank of the above (1), the explosive in the opening means is an igniter that activates when a current flows or an auto-ignition agent that automatically ignites at a predetermined temperature or higher, and the flame-extinguishing means is a flame extinguishing member that extinguishes a flame generated at the time of activating the igniter or the auto-ignition agent, the safety valve further including: a cylindrical member in which the igniter or the auto-ignition agent is disposed on one end side and a bottom portion in which a pore portion is formed is provided on the other end side, the flame extinguishing member is disposed inside or outside the cylindrical member or inside the pore portion so as to cover the pore portion, and the openable portion may be broken or cleaved by a pressure wave obtained after the flame is extinguished by the flame extinguishing member.

(5) In the safety valve for a high-pressure tank of the above (4), it is preferred that the flame-extinguishing means further contains a flame extinguishing agent, the flame extinguishing agent is disposed in at least a part of the inside of the cylindrical member, and the openable portion is broken or cleaved by a pressure wave obtained after the flame is extinguished by the flame extinguishing member and the flame extinguishing agent.

ADVANTAGEOUS EFFECTS OF INVENTION

According to the present invention, it is possible to provide a safety valve for a high-pressure tank capable of using ignition means as a driving force without igniting the gas.

BRIEF DESCRIPTION OF DRAWINGS

FIG. 1 is a partial sectional schematic view of a high-pressure tank including a safety valve according to a first embodiment of the present invention.
FIG. 2 is a partial sectional schematic view illustrating the safety valve of FIG. 1.
FIG. 3 is a partial sectional schematic view illustrating a safety valve according to a second embodiment of the present invention.
FIG. 4 is a partial sectional schematic view illustrating a safety valve according to a third embodiment of the present invention.
FIG. 5 is a partial sectional schematic view illustrating a safety valve according to a fourth embodiment of the present invention.
FIG. 6 is a partial sectional schematic view illustrating a safety valve according to a fifth embodiment of the present invention.
FIG. 7 is a partial sectional schematic view illustrating a safety valve according to a sixth embodiment of the present invention.
FIG. 8 is a partial sectional schematic view illustrating a safety valve according to a seventh embodiment of the present invention.
FIG. 9 is a partial sectional schematic view illustrating a safety valve according to an eighth embodiment of the present invention.
FIG. 10 is a partial sectional schematic view illustrating a safety valve according to a ninth embodiment of the present invention.
FIG. 11 is a partial sectional schematic view illustrating a safety valve according to a tenth embodiment of the present invention.
FIG. 12 is a partial sectional schematic view illustrating a safety valve according to an eleventh embodiment of the present invention.
FIG. 13 is a schematic view of a vehicle to which a high-pressure tank including a safety valve according to a twelfth embodiment of the present invention is attached.

FIG. 14 is a partial sectional schematic view illustrating a safety valve according to a thirteenth embodiment of the present invention.

FIG. 15 is a partial sectional schematic view illustrating a safety valve according to a fourteenth embodiment of the present invention.

## DESCRIPTION OF EMBODIMENTS

### <First embodiment>

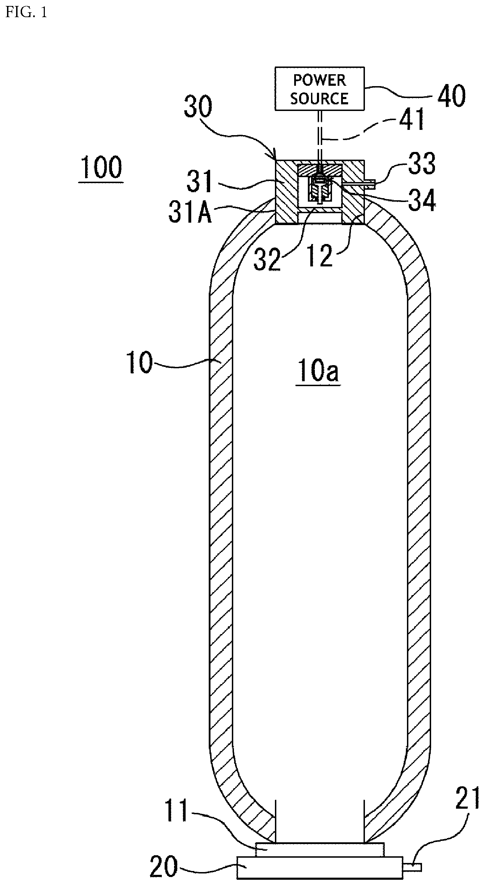

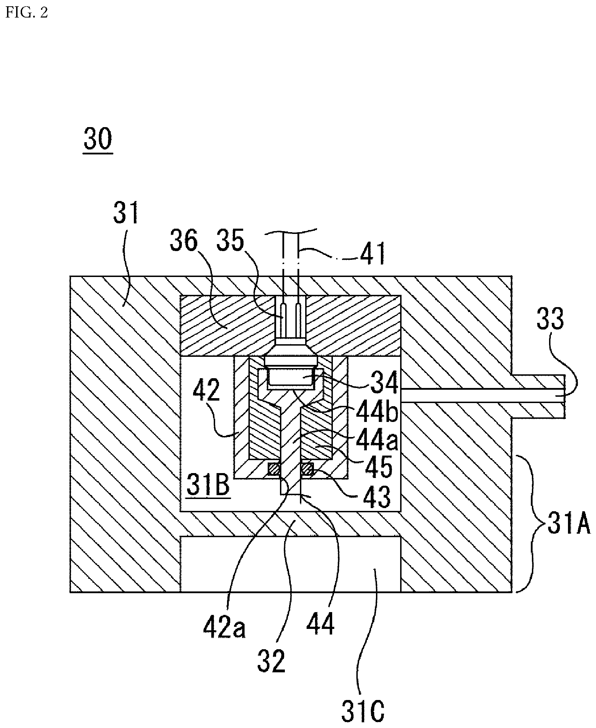

Hereinafter, a first embodiment of the present invention will be described in detail with reference to FIGS. 1 and 2. The present invention can be implemented in various forms without departing from the gist thereof. For example, in the following embodiment, a case where the present invention is applied to a high-pressure tank of fuel gas (high pressure hydrogen) mounted on a fuel cell vehicle is exemplified, but the present invention is not limited thereto, and can be applied to a high-pressure tank that stores another type of compressed gas or liquefied gas.

As shown in FIG. 1, a high-pressure tank 100 has a tank main body 10 provided with a space 10a for filling and storing a high-pressure gas (for example, hydrogen gas) therein, an opening 11 provided at one end of the tank main body 10 (lower end in FIG. 1), and an opening 12 provided at the other end (upper end in FIG. 1) of the tank main body 10.

A base member (not illustrated) is provided in the opening 11, and a valve (tank valve) 20 is mounted on the base member. The valve 20 is provided with a supply port 21 for supplying gas. For example, a pipe (not illustrated) connected to an engine using hydrogen as a power source such as a fuel cell or a hydrogen engine is connected to the supply port 21, and the gas in the space 10a of the tank main body 10 is supplied to the engine using hydrogen as a power source via the valve 20, the supply port 21, and the pipe at a normal time (when a high-temperature abnormality or the like due to a fire does not occur).

A female thread (not illustrated) is threaded in the opening 12, and a male thread (not illustrated) provided on a part of the outer peripheral portion of a safety valve 30 on the tank main body 10 side (a male threaded portion 31A on the tank main body 10 side of the outer peripheral portion of the main body 31 to be described later) is screwed into the opening 12, whereby the safety valve 30 is mounted.

The safety valve 30 has the main body 31 and the igniter 34 (an example of opening means that is provided on the downstream side of the gas flow with respect to the openable portion 32 with the tank main body 10 side as an upstream side in a flow path to be described later and opens the openable portion 32 using energy obtained by driving (activation) as a drive source). The main body 31 has a male threaded portion 31A that is a portion in which a male thread is threaded; an internal space 31B in which the igniter 34 is provided; a hole portion 31C which communicates with the space 10a of the tank main body 10; an openable portion 32 which is a bottom portion of the hole portion 31C and is opened (the pore portion is formed by melting, cleavage, breakage, or the like) when the igniter 34 is ignited; and a discharge port 33 which communicates with an external environment and discharges a gas at the time of activation.

Here, when the space 10a of the tank main body 10 is filled with hydrogen gas, it is preferable to use a material with measures against hydrogen embrittlement for the main body 31, and for example, it is preferable to use SUS316, SUS316L, or the like.

Also, in the openable portion 32, a weak portion such as a cut groove may be formed at a position where a tip portion of a rod-shaped portion 44a of a piston member 44 described later collides at the time of activation. As a result, cleavage can be facilitated, and scatters can be suppressed. In addition, the openable portion 32 may be formed to have a plate thickness that is not deformed by the in-tank gas pressure at a normal time and is cleaved by the piston member 44 moved by the activation of the igniter 34. Further, although the openable portion 32 is integrally formed with the main body 31, a through hole may be provided, a rupture disk may be provided so as to close the through hole, and the rupture disk may be cleaved by the piston member 44 moved by the activation of the igniter 34.

The size of the total opening area varies depending on the critical constant ($\sigma$), the gas constant (R), the temperature (T), the pressure (P) in the tank, the gas volume (V) in the tank, and the gas discharge time (t). The general formula is as follows.

[Mathematical Formula 1]

$$A = \frac{V\sqrt{RT}}{t\sigma P}$$

However, the volume in the tank that can be technically stored is determined, and it is difficult to produce a minute total opening area also in terms of processing technique. Also, in the case of a minute total opening area, the discharge port may be blocked by foreign matter or the like, and the effect of discharging the gas may not be achieved. Further, in a case where the total opening area is set to a certain value or more, there is a risk of ignition, detonation, and the like as the discharge speed of the gas increases and the high-concentration gas and oxygen in the air mix. In order to discharge the gas at an appropriate speed in consideration of these comprehensively, the total opening area of the discharge port 33 is preferably 0.008 to 5.5 $(mm^2)$, and more preferably 0.08 to 3.2 $(mm^2)$.

In addition, it is preferable that the discharge port 33 is provided toward the ground side, or a pipe is further attached so that the gas is discharged to the ground side. As a result, even if hydrogen gas is ignited, it is possible to discharge an amount with a small degree of influence (an amount with which damage to people, facilities, and the like is less likely to occur) from the discharge port 33, and it is possible to relatively smoothly discharge the hydrogen gas. Therefore, even if high-temperature abnormality or the like occurs due to a fire, it is possible to achieve both prevention of burst of the tank main body 10 and reduction of the degree of influence due to ignition of the discharged hydrogen gas.

A fixing member 36 is fixed to the external environment side of the internal space 31B (upper side in FIG. 2), and fixes and holds the igniter 34 on a part of the external environment side. A cylindrical member 42 is provided on the openable portion 32 side of the fixing member 36 so as to cover the periphery of the openable portion 32 side of the igniter 34. A pore portion 42a is formed in a bottom portion of the cylindrical member 42, and an O-ring 43 (seal member) is provided in the middle of an inner wall of the pore portion 42a. In addition, a piston member (sliding member) 44 is provided inside the cylindrical member 42 so that the tip portion of the rod-shaped portion 44a penetrates the pore portion 42a in the initial state. Further, the piston member 44 has a recessed receiving portion 44b that receives the flame of the igniter 34. Furthermore, a space between the inner wall of the cylindrical member 42 and the surface of the piston member 44 is filled with a heat reducing flame extinguishing agent 45 (an example of flame-extinguishing means), and the heat reducing flame extinguishing agent 45 is sealed by the O-ring 43 so as not to leak out of the cylindrical member 42 from the pore portion 42a. The heat reducing flame extinguishing agent 45 is, for example, salt, potassium chloride, oxalate, carboxylate, or the like, but may be any flame extinguishing agent as long as it can reduce the heat of the flame generated in the igniter 34 and can extinguish more flame than necessary after the igniter 34 is activated (reduce the energy of flame). Therefore, an extinguishing agent or an insulating oil may be used instead of the heat reducing flame extinguishing agent 45.

The igniter 34 is for generating flame, and includes an ignition portion (not illustrated) and a pair of terminal pins 35. The ignition portion includes, in its inside, an ignition charge that ignites and burns at the time of activation to generate flame, and a resistor for igniting the ignition charge.

More specifically, the ignition portion includes a squib cup formed in a cup shape, and a plug that closes an opening end of the squib cup and through which a pair of terminal pins 35 is inserted to hold the terminal pins, and has a configuration where a resistor (bridge wire) is attached so as to connect tips of the pair of terminal pins 35 inserted into the squib cup, and an ignition charge is loaded in the squib cup so as to surround the resistor or to be close to the resistor. In addition to the ignition charge, a firing charge and/or an AI agent can also be loaded into the squib cup as necessary.

Here, a nichrome wire or the like is generally used as the resistor, and ZPP (zirconium-potassium perchlorate), ZWPP (zirconium-tungsten-potassium perchlorate), an ignition charge (basic copper nitrate, zirconium) lead tricinate, or the like is generally used as the ignition charge. As a booster that emits a large amount of flame, further, a composition including metal powder/oxidizing agent represented by $B/KNO_3$, $B/NaNO_3$, $Sr(NO_3)_2$, or the like, a thermite composition, a composition including titanium hydride/potassium perchlorate, or a composition including titanium/potassium perchlorate is used as the firing charge, and a composition including B/5-aminotetrazole/potassium nitrate/molybdenum trioxide or a composition including 5-aminotetrazole/potassium nitrate/molybdenum trioxide or 5-aminotetrazole/potassium nitrate/strontium nitrate/molybdenum trioxide mainly containing 5-aminotetrazole/molybdenum trioxide, a composition including 3-nitro-1,2,4-triazol-5-one/sodium nitrate, smokeless explosive mainly containing nitrocellulose, or the like is used as the AI agent. Also, the squib cup and plug described above are generally made of metal or plastic.

The pair of terminal pins 35 is connected to an ignition portion in order to ignite an ignition charge, and is connected to a power source 40 (battery or the like) via a wiring 41. For example, the power source 40 receives a command signal transmitted from a control unit (not illustrated) when a detection temperature detected by a temperature sensor (not illustrated) that detects an external temperature of the tank main body 10 becomes equal to or higher than a predetermined value, and causes a predetermined amount of current to flow through the pair of terminal pins 35 via the wiring 41. That is, when the predetermined amount of current flows through the resistor, Joule heat is generated in the resistor, and the ignition charge starts combustion. The high temperature flame generated by the combustion ruptures the squib cup containing the ignition charge. The time from when the current flows through the resistor to when the igniter 34 is activated is generally 2 [ms] or less when a nichrome wire is used as the resistor.

Here, as a modification, an igniter and a gas generating agent may be combined (the gas generating agent is combusted by a flame generated by the activation of the igniter to generate gas) as necessary. By combining the igniter and the gas generating agent, the openable portion can be opened at a higher speed at the time of activation. In addition, when the filling pressure of the fluid filled in the high-pressure tank is high, it is necessary to set the strength of the openable portion to be high, and thus it is necessary to combine the gas generating agent with the igniter in order to instantaneously open the openable portion at the time of activation. The present modification can also be applied to other embodiments and modifications using an igniter.

The gas generating agent is formed by appropriately combining fuel and an oxidizing agent. The fuel component is one or more selected from the group consisting of guanidine derivatives, tetrazole derivatives, urea derivatives, triazole derivatives, hydrazine derivatives, triazine derivatives, and azodicarbonamide. The component of the oxidizing agent is one or more selected from the group consisting of metal oxides, chlorates, perchlorates, nitrates, basic nitrates, and basic carbonates. In addition, a combustion speed adjusting agent and a binder may be contained as necessary.

Next, an operation of the safety valve 30 in the high-pressure tank 100 in the present embodiment will be described.

Referring to FIG. 1, when the high-pressure tank 100 is exposed to an abnormally high temperature equal to or higher than a predetermined temperature, the temperature is detected by the above-described temperature sensor, and based on this, a current flows from the power source 40 to the igniter 34 that is a drive source via the wiring 41 in accordance with a command from the above-described control unit, and the igniter 34 activates. The flame generated by the activation of the igniter 34 is received by the receiving portion 44b of the piston member 44, and the piston member 44 receiving the energy of the flame moves to the openable portion 32 side. Thereafter, the tip portion of the rod-shaped portion 44a of the piston member 44 cleaves or breaks the openable portion 32 to form a pore portion. At this time, the heat reducing flame extinguishing agent 45 reduces the heat of the flame and extinguishes more flame than necessary. Subsequently, after the pore portion is formed in the openable portion 32, the piston member 44 is pushed back to the internal space 31B side by the pressure of the gas inside the tank main body 10. As a result, the internal space 31B and the hole portion 31C communicate with each other via the pore portion. With the internal space 31B and the hole portion 31C communicating with each other, the gas filled in the space 10a of the tank main body 10 is discharged to the external environment through a flow path formed by the hole portion 31C, the internal space 31B, and the discharge port 33.

According to the safety valve 30 having the above configuration, it is possible to use ignition means as a driving force without igniting the gas. In addition, a predetermined amount (for example, the degree of influence is small even if ignition occurs) of gas can be discharged from the beginning of the activation. Further, the cylindrical member 42 is filled with the heat reducing flame extinguishing agent 45. Therefore, in a case where the gas in the high-pressure tank 100 is a combustible gas, even when the igniter 34 is used as a means for forming the above-described pore portion in the openable portion 32, it is possible to prevent the combustible gas from being ignited.

Furthermore, in the case of use in the high-pressure tank 100 filled with hydrogen gas, by setting the diameter of the discharge port 33 to 0.001 mm to 0.2 mm, more preferably 0.01 mm to 0.1 mm, even if hydrogen gas is ignited, it is possible to discharge an amount with a small degree of influence from the discharge port 33, and it is possible to relatively smoothly discharge the hydrogen gas. Therefore, even if high-temperature abnormality or the like occurs due to a fire, it is possible to achieve both prevention of burst of the tank main body 10 and reduction of the degree of influence due to ignition of the discharged hydrogen gas.

<Second embodiment>

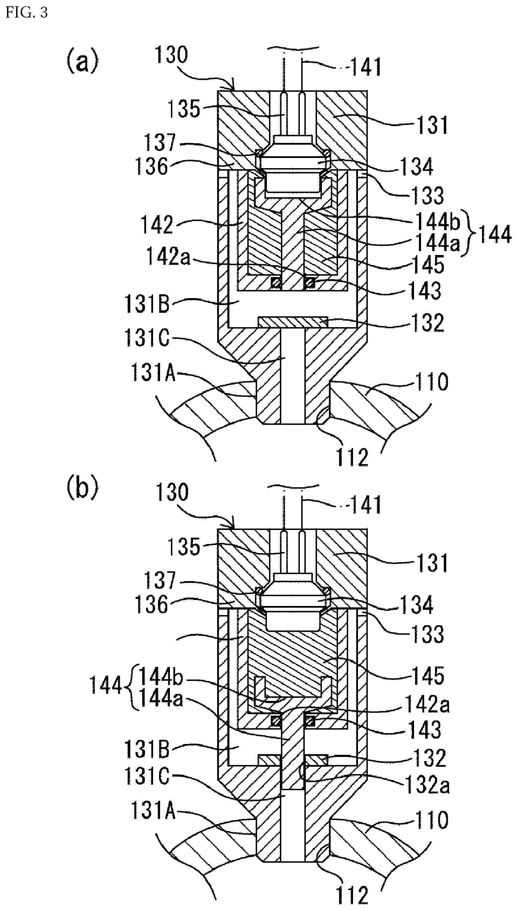

Next, a second embodiment of the present invention will be described in detail with reference to FIG. 3. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 3(a), the safety valve 130 is different from the safety valve 30 of the first embodiment mainly in that the safety valve 130 is a main body 131 having an elongated shape as a whole with respect to the main body 31 of the first embodiment, the openable portion 132, which is a bottom portion that closes the hole portion 131C, is formed by welding, caulking, cutting, or attaching a plate-shaped member, one or a plurality of discharge ports 133 are formed, the igniter 134 is caulked and fixed or molded by a fixing member 136, and a space between the main body 131 and the igniter 134 is sealed by an O-ring 137 (seal member).

Since a part of the openable portion 132 is exposed to the compressed gas for a long period of time, the openable portion 132 is desirably made of a nickel alloy member formed of a thin metal plate. For example, a thin plate made of metal having heat resistance and corrosion resistance (for example, a thickness of about 200 [μm]) is suitably used as the openable portion 132, and a thin plate made of stainless steel such as SUS316 or SUS316L (JIS symbol) composed of Ni: 10 [wt%], Cr: 23 [wt%], Mn: 6 [wt%], Mo: 2 [wt%], C: 0.01 [wt%], N: 0.5 [wt%], other component ratios, or an Inconel alloy (Inconel 625) is particularly suitably used. Also, in the openable portion 132, a weak portion such as a cut groove may be formed at a position where a tip portion of a rod-shaped portion 144a of a piston member 144 collides at the time of activation.

Note that, among the plurality of discharge ports 133, those that can be provided toward the ground side may be left as they are, but it is preferable to attach a pipe to those that cannot be provided toward the ground side so that the gas is discharged to the ground side. In the case of a structure in which the exhaust gas is not combusted or a heat shielding structure or a flame shielding structure in order to prevent flame from damaging others even when the exhaust gas is combusted, the plurality of discharge ports 133 may not be provided toward the ground side.

Next, an operation of the safety valve 130 in the present embodiment will be described.

Referring to FIG. 3, when the high-pressure tank is exposed to an abnormally high temperature equal to or higher than a predetermined temperature, the temperature is detected by a temperature sensor, and based on this, a current flows from a power source (not illustrated) to the igniter 134 via a wiring 141 according to a command from the above-described control unit, and the igniter 134 activates. The flame generated by the activation of the igniter 134 is received by a receiving portion 144b of the piston member 144, and the piston member 144 receiving the energy of the flame moves to the openable portion 132 side along the penetrating direction of a pore portion 142a. Thereafter, the tip portion of the rod-shaped portion 144a of the piston member 144 cleaves or breaks the openable portion 132 to form a pore portion 132a. At this time, the heat reducing flame extinguishing agent 145 reduces the heat of the flame and extinguishes more flame than necessary. Subsequently, after the pore portion 132a is formed in the openable portion 132, the piston member 144 is pushed back to an internal space 131B side by the pressure of the gas inside the tank main body. As a result, the internal space 131B and the hole portion 131C communicate with each other via the pore portion 132a (see FIG. 3(b)). With the internal space 131B and the hole portion 131C communicating with each other, the gas filled in the internal space of the tank main body 110 is discharged to the external environment through a flow path formed by the hole portion 131C, the pore portion 132a, the internal space 131B, and the discharge port 133.

According to the safety valve 130 having the above configuration, the same effects as those of the first embodiment can be exhibited.


<Third embodiment>

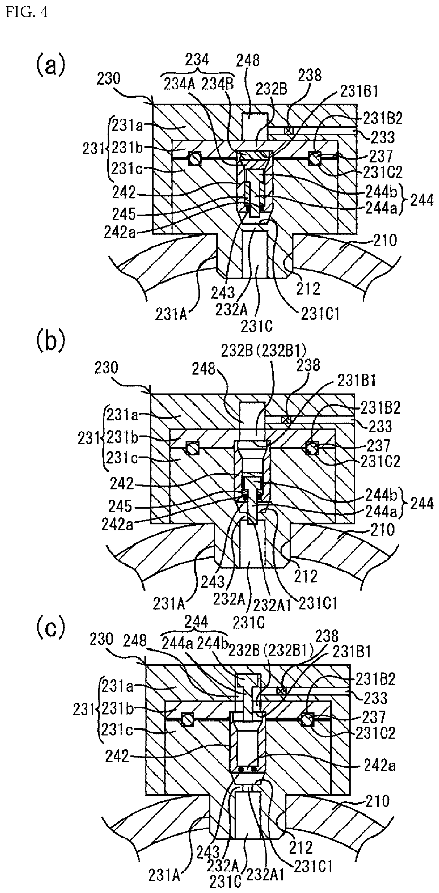

Next, a third embodiment of the present invention will be described in detail with reference to FIG. 4. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 4, a safety valve 230 is different from the safety valve 30 of the first embodiment mainly in that a main body 231 including a plurality of members is used, an ignition charge 234A and an auto-ignition agent (AI agent) 234B are used as opening means 234 instead of the igniter, and a filter 238 is provided in a discharge port 233.

The main body 231 includes a first member 231a having a recessed cross section, a second member 231b having a substantially plate shape, and a third member 231c having a substantially T-shaped cross section. An internal space 248 in which a piston member 244 is movable after activation and the discharge port 233 are formed inside the first member 231a. A recess 231B1 is formed on the third member 231c side of the central portion of the second member 231b, and a recess 231C1 is formed on the second member 231b side of the central portion of the third member 231c. Then, between the recess 231B1 and the recess 231C1, a cylindrical member 242, an AI agent 234B disposed on the recess 231B1 side of the cylindrical member 242, the ignition charge 234A disposed on the recess 231C1 side of the AI agent 234B, and the piston member 244 sandwiching the ignition charge 234A and the AI agent 234B together with an openable portion 232B are provided. Also, a space between the inner wall of the cylindrical member 242 and the surface of a rod-shaped portion 244a of the piston member 244 is filled with a heat reducing flame extinguishing agent 45 (an example of flame-extinguishing means), and the heat reducing flame extinguishing agent 245 is sealed by an O-ring 243 so as not to leak out of the cylindrical member 242 from a pore portion 242a. Either of the ignition charge 234A and the AI agent 234B may be disposed on the recess 231C1 side, and further, the ignition charge 234A may be included in the AI agent 234B, and further, the AI agent 234B alone may be used. In addition, ring-shaped recesses 231B2 and 231C2 for disposing a seal member 237 between the second member 231b and the third member 231c are provided on opposing surfaces of the second member 231b and the third member 231c, respectively. Further, a gap (clearance) is provided between a receiving portion 244b of the piston member 244 and the inner wall of the cylindrical member 242. As a result, when the piston member 244 slides to the recess 231C1 side after the activation, a part of the heat reducing flame extinguishing agent 245 is pushed out from the gap to the openable portion 232B side from the state of FIG. 4(a), and moves to the openable portion 232B side of the cylindrical member 242 (see FIG. 4(b)).

The seal member 237 is, for example, an O-ring, a packing, a gasket, or the like. As a material of the seal member 237, fluororubber, styrene-based rubber, olefin-based rubber, or the like may be used. As another aspect, a method of applying an adhesive to the seal member 237 for sealing may be used. As the adhesive, for example, an adhesive containing a cyanoacrylate-based resin, a silicone-based resin, a styrene-based rubber, an olefin-based rubber, or the like as a raw material can be suitably used. In addition, the seal member 237 may be made of metal containing at least one of stainless steel, copper, a copper alloy, aluminum, and an aluminum alloy.

Examples of the ignition charge 234A include ZPP (zirconium-potassium perchlorate), ZWPP (zirconium-tungsten-potassium perchlorate), lead tricinate, and the like.

At a temperature equal to or higher than a predetermined temperature lower than an ignition temperature of the ignition charge, the AI agent 234B is an explosive having an auto-ignition (AI) function of automatically igniting in response to heat due to the temperature. Here, the AI agent 234B is preferably one that automatically ignites at a temperature lower than the temperature at which the high-pressure tank bursts, for example, an ignition temperature of 230°C or lower, and is further preferably one that automatically ignites at 200°C or lower in consideration of the thermal conductivity and the distance of the heat source. Note that, for example, the AI agent 234B preferably contains the following components (A) or (B).

(A) It is an AI agent formed by bonding and molding a fuel component, an oxidizing agent, and a combustion modifier by a binder. Here, examples of the fuel component include a nitrogen atom-containing organic substance composed of aminotetrazole or a salt thereof. Examples of the oxidizing agent include those in which 50 wt% or more of the oxidizing agent contains nitrate. Examples of combustion modifier include molybdenum, iron, or an oxide thereof. Examples of the binder include those selected from the group of the following (1), (2), and (3).

(1) Hydrotalcite-type compounds represented by the following general formula $[M^{2+}_{1-x}M^{3+}_x(OH)_2]^{x+}[A^{n-}_{x/n} \cdot mH_2O]^{x-}$

wherein $M^{2+}$: a divalent metal such as $Mg^{2+}$, $Mn^{2+}$, $Fe^{2+}$, $Co^{2+}$, $Ni^{2+}$, $Cu^{2+}$, or $Zn^{2+}$
$M^{3+}$: a trivalent metal such as $Al^{3+}$, $Fe^{3+}$, $Cr^{3+}$, $Co^{3+}$, or $In^{3+}$
$A^{n-}$: $OH^-$, $F^-$, $Cl^-$, $Br^-$, $NO_3^-$, $CO_3^{2-}$,
a n-valent anion such as $SO_4^{2-}$, $Fe(CN)_6^{3-}$, $CH_3COO^-$, an oxalate ion, or a salicylate ion
x: $0 < x \leq 0.33$

(2) Acidic clay
(3) Polymer binder

The polymer binder can improve breaking strength and other mechanical properties when the explosive is formed into a desired molded body. Specific examples of the polymer binder include metal salts of carboxymethyl cellulose, polysaccharide derivatives such as hydroxyethyl cellulose, hydroxypropyl methyl cellulose, cellulose acetate, cellulose propionate, cellulose acetate butyrate, nitrocellulose, guar gum, polyvinyl alcohol, polyacrylamide, and starch, organic binders such as stearate, fluororubber, and SBS rubber, and the like. These polymer binders may be used singly or in combination of two or more types thereof.

(B) The AI agent contains components of (a) 3 to 25 (wt%) of 5-aminotetrazole, (b) 5 to 30 (wt%) of boron, (c) 50 to 85 (wt%) of potassium nitrate, and (d) 0.2 to 10 (wt%) of molybdenum trioxide at each composition ratio, and has a calorific value of 4500 J/g or more.

Here, as a modification, an AI agent and a gas generating agent may be combined (the gas generating agent is combusted by an automatic ignition function of the AI agent to generate a gas) as necessary. By combining the AI agent and the gas generating agent, the openable portion can be opened at a higher speed at the time of activation. In addition, when the filling pressure of the fluid filled in the high-pressure tank is high, it is necessary to set the strength of the openable portion to be high, and thus it is necessary to combine the gas generating agent with the AI agent in order to instantaneously open the openable portion at the time of activation. The present modification can also be applied to embodiments and modifications using another AI agent.

The gas generating agent is formed by appropriately combining fuel and an oxidizing agent. The fuel component is one or more selected from the group consisting of guanidine derivatives, tetrazole derivatives, urea derivatives, triazole derivatives, hydrazine derivatives, triazine derivatives, and azodicarbonamide. The component of the oxidizing agent is one or more selected from the group consisting of metal oxides, chlorates, perchlorates, nitrates, basic nitrates, and basic carbonates. In addition, a combustion speed adjusting agent and a binder may be contained as necessary.

Next, an operation of the safety valve 230 in the present embodiment will be described.

Referring to FIG. 4(a), when the high-pressure tank is exposed to an abnormally high temperature equal to or higher than a predetermined temperature lower than the temperature at which the high-pressure tank bursts, the AI agent 234B reacts to heat due to the temperature, and the AI agent 234B automatically ignites and the ignition charge 234A burns, so that the opening means 234 activates. The flame generated by the activation of the opening means 234 is received by the receiving portion 244b of the piston member 244, and the piston member 244 receiving the energy of the flame moves to an openable portion 232A side. Thereafter, the tip portion of the rod-shaped portion 244a of the piston member 244 cleaves or breaks the openable portion 232A to form a pore portion 232A1 (see FIG. 4(b)). At this time, the openable portion 232B is also opened (a pore portion 232B1 is formed at the bottom portion of the recess 231B1 due to melting, cleavage, breakage, or the like) (see FIG. 4(b)), and the heat reducing flame extinguishing agent 45 decreases the heat of the flame and extinguishes more flame than necessary. Subsequently, after the pore portions 232A1 and 232B1 are formed in the openable portions 232A and 232B, respectively, the piston member 244 is pushed back to the internal space 248 by the pressure of the gas inside a tank main body 210. As a result, the discharge port 233 and a hole portion 231C communicate with each other via the pore portion 232A1, the pore portion 242a, the inside of the cylindrical member 242, the pore portion 232B1, and the internal space 248. With the discharge port 233 and the hole portion 131C communicating with each other, the gas filled in the internal space of the tank main body 210 is discharged to the external environment through the hole portion 131C, the pore portion 232A1 formed at the bottom portion of the recess 231C1, the recess 231C1, the recess 231B1, the pore portion 232B1 formed at the bottom portion of the recess 231B1, and the flow path formed by the discharge port 233. In the discharge port 233, the filter 238 may be disposed as necessary. The filter 238 has a function of collecting residues generated when the ignition charge 234A and the AI agent 234B burn, and taking heat of the generated gas to cool or extinguish the flame. In addition, even when the heat reducing flame extinguishing agent 245 remains after the activation, it can be collected by the filter 238.

With the above configuration, the same functions and effects as those of the first embodiment can be exhibited. Further, since an external power source such as the power source 40 is not required, it is possible to reduce the weight of the safety valve 230 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Fourth embodiment>

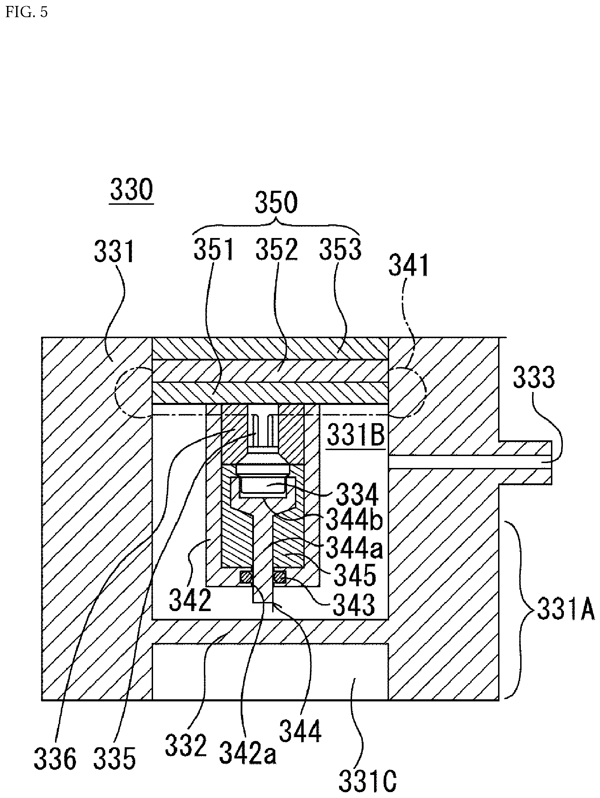

Next, a fourth embodiment of the present invention will be described in detail with reference to FIG. 5. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 5, a safety valve 330 is different from the safety valve 30 of the first embodiment mainly in that a power generation unit 350 is used as a current supply source to an igniter 334, a wiring 341 for transmitting a current generated in the power generation unit 350 is provided, a fixing member 336 is provided inside the power generation unit 350 and inside a cylindrical member 342, and the igniter 334 is provided inside the cylindrical member 342.

The power generation unit 350 includes an inner first metal layer 351, an intermediate semiconductor layer 352, and an outer second metal layer 353, and the semiconductor layer 352 is sandwiched between the first metal layer 351 and the second metal layer 353. Note that the power generation unit 350 is formed by laminating two or more materials having different Seebeck coefficients among semiconductors in layers, and may be of any type as long as it can generate a current when exposed to an abnormally high temperature equal to or higher than a predetermined temperature. Note that the Seebeck coefficient generally refers to a proportional coefficient between a temperature difference and a voltage, in which a voltage proportional to the temperature difference is generated when the temperature difference is generated at both ends of a metal and a semiconductor. Here, examples of the combination of two semiconductors include an n-type semiconductor, a p-type semiconductor, and the like. In addition, when two or more metals and semiconductors are selected, for example, materials having different Seebeck coefficients are appropriately selected from the materials listed in the following combinations of two metals and the above combinations of two semiconductors. Examples of the combination of two metals include iridium and rhodium, platinum and rhodium, copper and constantan, iron and constantan, copper and iron, gold and platinum, nickel and molybdenum, tungsten and rhenium, gold and palladium, platinum and palladium, and the like. In addition, the power generation unit 350 may be made of only one type of metal from which the Seebeck effect can be obtained by being disposed so that a temperature difference (temperature gradient) occurs between the outer side and the inner side when the outside has an abnormally high temperature.

Next, an operation of the safety valve 330 in the present embodiment will be described.

Referring to FIG. 5, when the high-pressure tank is exposed to an abnormally high temperature equal to or higher than a predetermined temperature, a current flows from the power generation unit 350 to the igniter 334 via the wiring 341, and the igniter 334 activates. The flame generated by the activation of the igniter 334 is received by the receiving portion 344b of the piston member 344, and the piston member 344 receiving the energy of the flame moves to the openable portion 332 side. Thereafter, the tip portion of the rod-shaped portion 344a of the piston member 344 cleaves or breaks the openable portion 332 to form a pore portion. At this time, the heat reducing flame extinguishing agent 345 reduces the heat of the flame and extinguishes more flame than necessary. Subsequently, after the pore portion is formed in the openable portion 332, the piston member 344 is pushed back to an internal space 331B side by the pressure of the gas inside the tank main body. As a result, the internal space 331B and a hole portion 331C communicate with each other via the pore portion. With the internal space 331B and the hole portion 331C communicating with each other, the gas filled in the tank main body is discharged to the external environment through a flow path formed by the hole portion 331C, the internal space 331B, and a discharge port 333.

With the above configuration, the same functions and effects as those of the first embodiment can be exhibited. Further, since an external power source such as the power source 40 is not required, it is possible to reduce the weight of the safety valve 330 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Fifth embodiment>

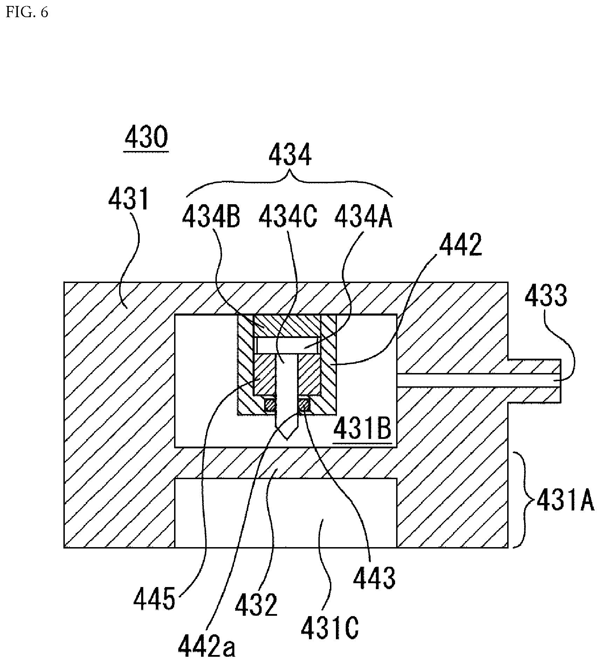

Next, a fifth embodiment of the present invention will be described in detail with reference to FIG. 6. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 6, a safety valve 430 is different from the safety valve 30 of the first embodiment mainly in that opening means 434 is used instead of the igniter.

The opening means 434 is provided inside a cylindrical member 442, and includes a plate-like pedestal 434A and a pin member 434C (protrusion) having a piston function, and an AI agent 434B. The plate-like pedestal 434A is movable along the inner wall of the cylindrical member 442 and is attached to the openable portion 432 side of the AI agent 434B. The pin member 434C is fixed to the openable portion 432 side of the plate-like pedestal 434A, and is a member having a pointed tip. Also, the pin member 434C is provided so as to penetrate a pore portion 442a provided at the bottom portion of the cylindrical member 442. Further, a gap (clearance) is provided between the plate-like pedestal 434A and the inner wall of the cylindrical member 442. As a result, when the plate-like pedestal 434A and the pin member 434C slide to a recess 431C1 side after the activation, a part of a heat reducing flame extinguishing agent 445 is pushed out from the gap to the AI agent 434B side from the state of FIG. 6 and moves to the AI agent 434B side of the cylindrical member 442.

Next, an operation of the safety valve 430 in the present embodiment will be described.

Referring to FIG. 6, when the high-pressure tank is exposed to an abnormally high temperature equal to or higher than a predetermined temperature lower than the temperature at which the high-pressure tank bursts, the AI agent 434B automatically ignites in response to heat due to the temperature. By a pressure wave (including static pressure and dynamic pressure) generated by automatic ignition of the AI agent 434B, the plate-like pedestal 434A moves to the openable portion 432 side, and the openable portion 432 is opened (a pore portion is formed by cleavage, breakage, or the like) by the pin member 434C. At this time, the heat reducing flame extinguishing agent 445 reduces the heat of the flame due to the ignition of the AI agent 434B and extinguishes more flame than necessary. Subsequently, after the pore portion is formed in the openable portion 432, the plate-like pedestal 434A and the pin member 434C are pushed back to an internal space 431B side by the pressure of the gas inside the tank main body. As a result, the internal space 431B and the hole portion 431C communicate with each other via the pore portion. With the internal space 431B and the hole portion 431C communicating with each other, the gas filled in the tank main body is discharged to the external environment through a flow path formed by the hole portion 431C, the internal space 431B, and the discharge port 433.

With the above configuration, the same functions and effects as those of the first embodiment can be exhibited. Further, since an external power source such as the power source 40 is not required, it is possible to reduce the weight of the safety valve 430 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Sixth embodiment>

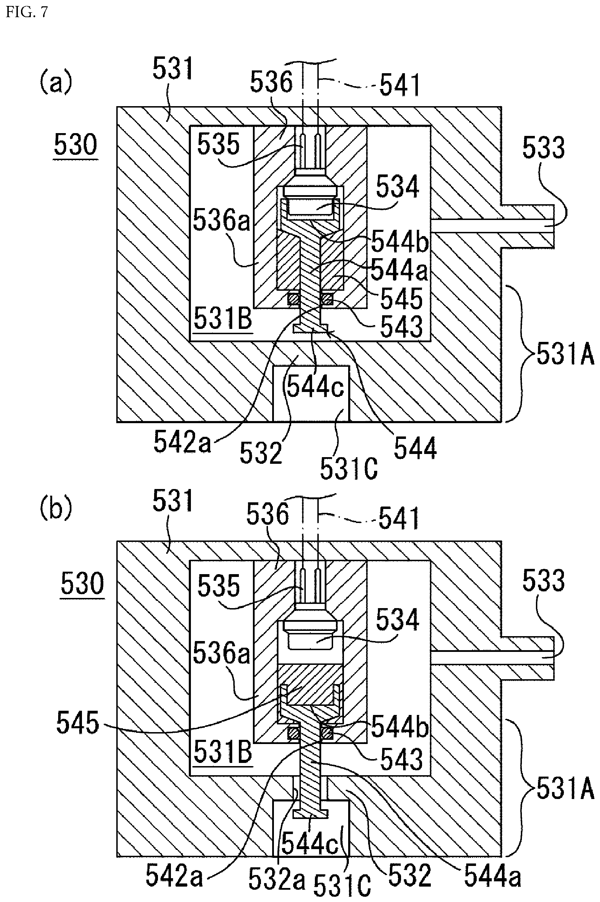

Next, a sixth embodiment of the present invention will be described in detail with reference to FIG. 7. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As shown in FIG. 7, a safety valve 530 is different from the safety valve 30 of the first embodiment mainly in that a fixing member 536 having a cylindrical cylinder portion 536a whose inner wall is in contact with the periphery of a receiving portion 544b is used, and a piston member 544 having an enlarged diameter portion 544c whose diameter is larger than the diameter of the rod-shaped portion 544a at the tip of the rod-shaped portion 544a is used. Further, a gap (clearance) is provided between a receiving portion 544b of the piston member 544 and the inner wall of the cylindrical member 542. As a result, when the piston member 544 slides to the recess 531C1 side after the activation, a part of the heat reducing flame extinguishing agent 545 is pushed out from the gap to the igniter 534 side from the state of FIG. 7(a), and moves to the igniter 534 side of the cylindrical member 542 (see FIG. 7(b)).

Next, an operation of the safety valve 530 in the present embodiment will be described.

Referring to FIG. 7, when the high-pressure tank is exposed to an abnormally high temperature equal to or higher than a predetermined temperature, the temperature is detected by a temperature sensor (not illustrated), and based on this, a current flows from a power source (not illustrated) to the igniter 534 via a wiring 541 according to a command from the above-described control unit, and the igniter 534 activates. The piston member 544 slides inside the cylinder portion 536a to an openable portion 532 side by a pressure wave (including static pressure and dynamic pressure) generated by the activation of the igniter 534. Thereafter, the openable portion 532 is opened (a pore portion 532a is formed by cleavage, breakage, or the like) by the enlarged diameter portion 544c of the piston member 544, and an internal space 531B and a hole portion 531C communicate with each other (see FIG. 7(b)). At this time, the heat reducing flame extinguishing agent 545 reduces the heat of the flame due to the activation of the igniter 534 and extinguishes more flame than necessary. With the internal space 531B and the hole portion 531C communicating with each other in this manner, the gas filled in the tank main body is discharged to the external environment through a flow path formed by the hole portion 531C, the internal space 531B, and a discharge port 533.

With the above configuration, the same functions and effects as those of the first embodiment can be exhibited.

<Seventh embodiment>

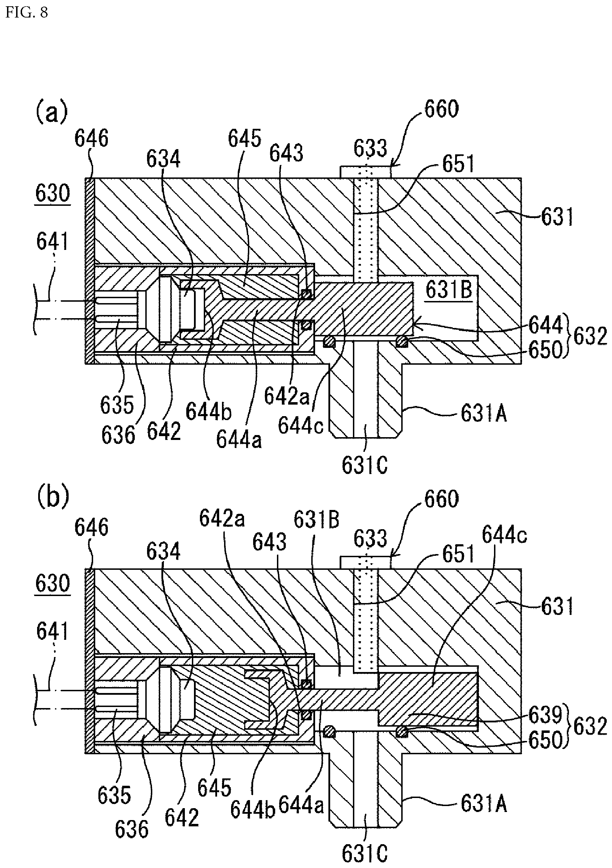

Next, a seventh embodiment of the present invention will be described in detail with reference to FIG. 8. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in the diagram of the initial state of FIG. 8(a), a safety valve 630 is different from the safety valve 30 of the first embodiment mainly in that an openable portion 632, which is a bottom portion that closes a hole portion 631C, is formed by closing the hole portion 631C using a plane of a head portion 644c of a piston member 644 (lower side surface of FIG. 8(a)) and a seal member 650, the piston member 644 is provided so as to slide in an internal space 631B by a pressure wave (including static pressure and dynamic pressure) at the time of activation of an igniter 634, a plate-shaped member 646 is bonded and fixed to a side portion of a main body 631, and in a state where one end of a fixing member 636 is in contact with the plate-shaped member 646, the igniter 634 is fixed and held at the other end of the fixing member 636. As illustrated in FIG. 8(a), the head portion 644c of the piston member 644 is pressed against the seal member 650 side by a bolt member 660 screwed into a through hole 651, so that a high-pressure gas can be sufficiently sealed, and the internal space 631B and the hole portion 631C do not communicate with each other in the initial state. In addition, a discharge port 633 communicating with the outside is formed inside the bolt member 660, and when the piston member 644 is in the state of FIG. 8(b), the internal space 631B and the outside communicate with each other via the discharge port 633. Further, when the head portion 644c of the piston member 644 is pressed against the seal member 650 side by the bolt member 660, the fixing member 636 and the cylindrical member 442 are movable along the axial direction of the bolt member 660 inside the main body 631 in accordance with the movement of the head portion 644c.

Next, an operation of the safety valve 630 in the present embodiment will be described.

Referring to FIG. 8(a), when the high-pressure tank is exposed to an abnormally high temperature equal to or higher than a predetermined temperature, the temperature is detected by a temperature sensor (not illustrated), and based on this, a current flows from a power source (not illustrated) to the igniter 634 via a wiring 641 according to a command from the above-described control unit, and the igniter 634 activates. The piston member 644 slides inside the internal space 631B to the side opposite to the igniter 634 by a pressure wave (including static pressure and dynamic pressure) generated by the activation of the igniter 634. At this time, the heat reducing flame extinguishing agent 645 reduces the heat of the flame due to the activation of the igniter 634 and extinguishes more flame than necessary. As a result, the openable portion 632 formed by the piston member 644 and the seal member 650 is opened, and the internal space 631B and the hole portion 631C communicate with each other (see FIG. 8(b)). With the internal space 631B and the hole portion 631C communicating with each other in this manner, the gas filled in the tank main body is discharged to the external environment through a flow path formed by the hole portion 631C, the internal space 631B around a rod-shaped portion 644a in FIG. 8(b), and the discharge port 633.

With the above configuration, the same functions and effects as those of the first embodiment can be exhibited.

<Eighth embodiment>

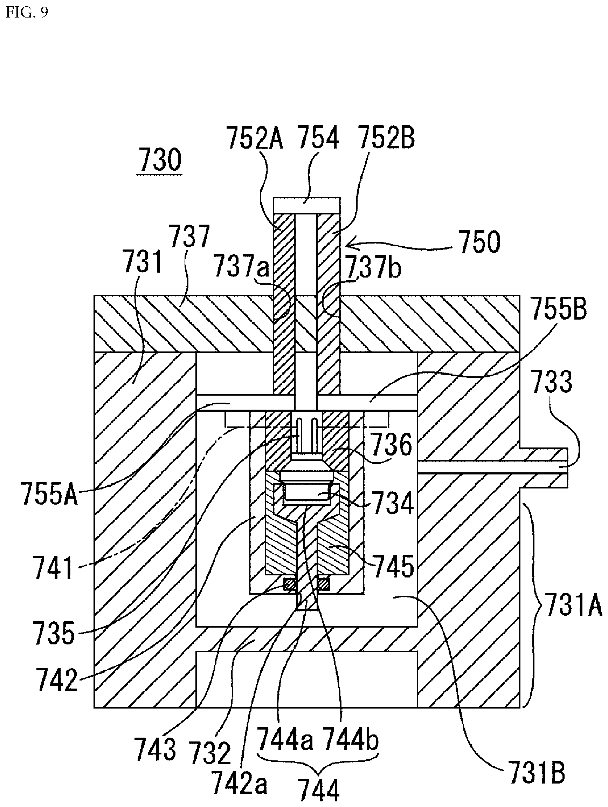

Next, an eighth embodiment of the present invention will be described in detail with reference to FIG. 9. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 9, a safety valve 730 is different from the safety valve 30 of the first embodiment mainly in that a power generation unit 750 is used as a current supply source to an igniter 734, a wiring 741 for transmitting a current generated in the power generation unit 750 is provided, a fixing member 736 is provided in a part of the power generation unit 750 to support the igniter 734, an internal space 731B is formed by a main body 731 and a lid portion 737, a fixing member 736 is provided inside a cylindrical member 742, and the igniter 734 is provided inside the cylindrical member 742.

The power generation unit 750 includes a first semiconductor 752A, a second semiconductor 752B, and conductive members 754, 755A, and 755B. For example, the first semiconductor 752A is an n-type semiconductor, and the second semiconductor 752B is a p-type semiconductor.

One end portion (outer end portion) of the first semiconductor 752A and one end portion (outer end portion) of the second semiconductor 752B are electrically connected via the conductive member 754. Further, the other end portion of the first semiconductor 752A is electrically connected to one terminal pin 735 via the conductive member 755A and one wiring 741. Furthermore, the other end portion of the second semiconductor 752B is electrically connected to the other terminal pin 735 via the conductive member 755B and the other wiring 741. Each of the conductive member 755A and the conductive member 755B is fixed to the inner wall of the main body 731 in a state of being electrically insulated from the main body 731 by an adhesive such as resin.

The internal space 731B is formed by being surrounded by the main body 731 having a recess at the center and the lid portion 737 provided to close the recess. Also, the main body 731 and the lid portion 737 also function as a protective portion that protects the other end side of the first semiconductor 752A and the second semiconductor 752B (igniter 734 side) from external heat.

In addition, each of the first semiconductor 752A and the second semiconductor 752B of the power generation unit 750 is provided so as to penetrate through holes 737a and 737b provided in the lid portion 737. Although not illustrated, the through holes 737a and 737b are closed by the first semiconductor 752A, the second semiconductor 752B, resin, and the like so as not to leak gas. Further, the first semiconductor 752A and the second semiconductor 752B are electrically insulated from the through holes 737a and 737b.

The igniter 734 is supported by the fixing member 736 fixed to the igniter 734 side of the conductive members 755A and 755B.

Next, an operation of the safety valve 730 in the present embodiment will be described.

Referring to FIG. 9, when the high-pressure tank is exposed to an abnormally high temperature equal to or higher than a predetermined temperature, a temperature difference occurs between the outer portions of the first semiconductor 752A and the second semiconductor 752B and the internal space 731B side portion of the first semiconductor 752A and the second semiconductor 752B, a current flows from the power generation unit 750 to the igniter 734 via the wiring 741 due to the Seebeck effect, and the igniter 734 activates. The flame generated by the activation of the igniter 734 is received by the receiving portion 744b of the piston member 744, and the piston member 744 receiving the energy of the flame moves to the openable portion 732 side. Thereafter, the tip portion of the rod-shaped portion 744a of the piston member 744 cleaves or breaks the openable portion 732 to form a pore portion. At this time, the heat reducing flame extinguishing agent 745 reduces the heat of the flame and extinguishes more flame than necessary. Subsequently, after the pore portion is formed in the openable portion 732, the piston member 744 is pushed back to the internal space 731B side by the pressure of the gas inside the tank main body. As a result, the gas filled in the tank main body is discharged to the external environment through the flow path formed by the pore portion, the internal space 731B, and the discharge port 733. Note that a filter circuit using a transistor protection circuit, a diode, or the like may be connected between the wiring 741 and the igniter 734 as necessary for the purpose of cutting off a current equal to or less than a certain current value. Accordingly, malfunction in an unintended situation can be prevented.

With the above configuration, the same functions and effects as those of the first embodiment can be exhibited. Further, since an external power source such as the power source 40 is not required, it is possible to reduce the weight of the safety valve 730 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Ninth embodiment>

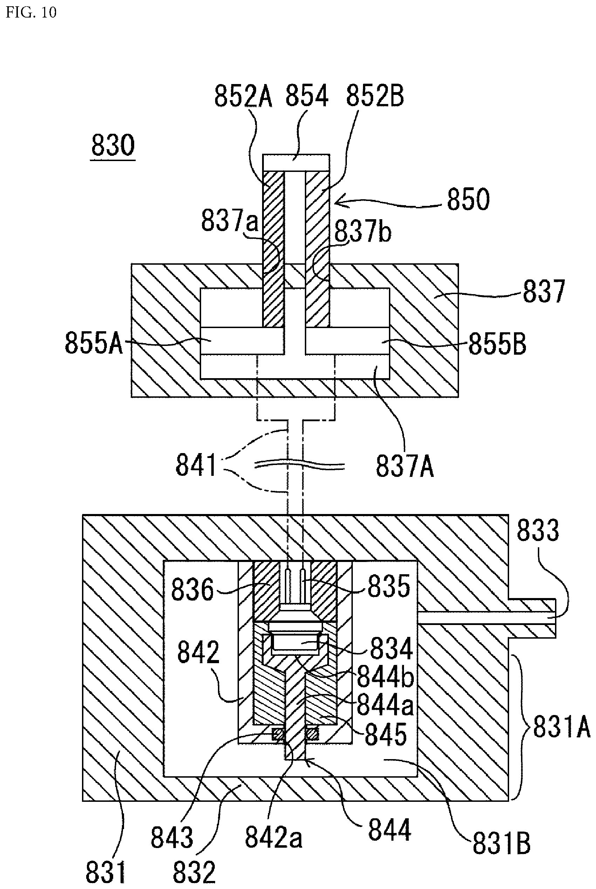

Next, a ninth embodiment of the present invention will be described in detail with reference to FIG. 10. Since the high-pressure tank of the present embodiment is substantially the same as that of the first embodiment or the eighth embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 10, a safety valve 830 is different from the safety valve 730 of the eighth embodiment mainly in that a power generation unit 850 provided separately from a main body 831 is used as a current supply source to an igniter 834. In addition, the safety valve 830 is different from the safety valve 30 of the first embodiment in that the power generation unit 850 is used instead of the power source 40 (battery or the like) of the first embodiment, a fixing member 836 is provided inside a cylindrical member 842, and the igniter 834 is provided inside the cylindrical member 842.

The power generation unit 850 includes a first semiconductor 852A, a second semiconductor 852B, conductive members 854, 855A, and 855B, and a box-shaped protective portion 837. The protective portion 837 protects from external heat, and is formed of a material similar to that of the main body 831, a heat resistant material, or the like.

One end portion (outer end portion) of the first semiconductor 852A and one end portion (outer end portion) of the second semiconductor 852B are electrically connected via the conductive member 854. Further, the other end portion of the first semiconductor 852A is electrically connected to one terminal pin 835 via the conductive member 855A and one wiring 841. Furthermore, the other end portion of the second semiconductor 852B is electrically connected to the other terminal pin 835 via the conductive member 855B and the other wiring 841. Each of the conductive member 855A and the conductive member 855B is fixed to the inner wall of the protective portion 837 with an adhesive such as resin.

In addition, each of the first semiconductor 852A and the second semiconductor 852B of the power generation unit 850 is provided so as to penetrate through holes 837a and 837b provided on the upper side of the protective portion 837. Although not illustrated, the through holes 837a, 837b are closed by the first semiconductor 852A, the second semiconductor 852B, resin, and the like. Also, the first semiconductor 852A and the second semiconductor 852B are electrically insulated from the through holes 837a and 837b.

Next, an operation of the safety valve 830 in the present embodiment will be described.

Referring to FIG. 10, when the power generation unit 850 is exposed to an abnormally high temperature equal to or higher than a predetermined temperature, a temperature difference occurs between the outer portions of the first semiconductor 852A and the second semiconductor 852B and the internal space 837A side portions of the first semiconductor 852A and the second semiconductor 852B, and a current flows from the power generation unit 850 to the igniter 834 via the wiring 841 due to the Seebeck effect, and the igniter 834 activates. The flame generated by the activation of the igniter 834 is received by the receiving portion 844b of the piston member 844, and the piston member 844 receiving the energy of the flame moves to the openable portion 832 side. Thereafter, the tip portion of the rod-shaped portion 844a of the piston member 844 cleaves or breaks the openable portion 832 to form a pore portion. At this time, the heat reducing flame extinguishing agent 845 reduces the heat of the flame and extinguishes more flame than necessary. Subsequently, after the pore portion is formed in the openable portion 832, the piston member 844 is pushed back to an internal space 831B side by the pressure of the gas inside the tank main body. As a result, the gas filled in the tank main body is discharged to the external environment through the flow path formed by the pore portion, the internal space 831B, and the discharge port 833. Note that a filter circuit using a transistor protection circuit, a diode, or the like may be connected between the wiring 841 and the igniter 834 as necessary for the purpose of cutting off a current equal to or less than a certain current value. Accordingly, malfunction in an unintended situation can be prevented.

With the above configuration, the same functions and effects as those of the first and eighth embodiments can be achieved. Further, since an external power source such as the power source 40 is not required, it is possible to reduce the weight of the safety valve 830 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Tenth embodiment>

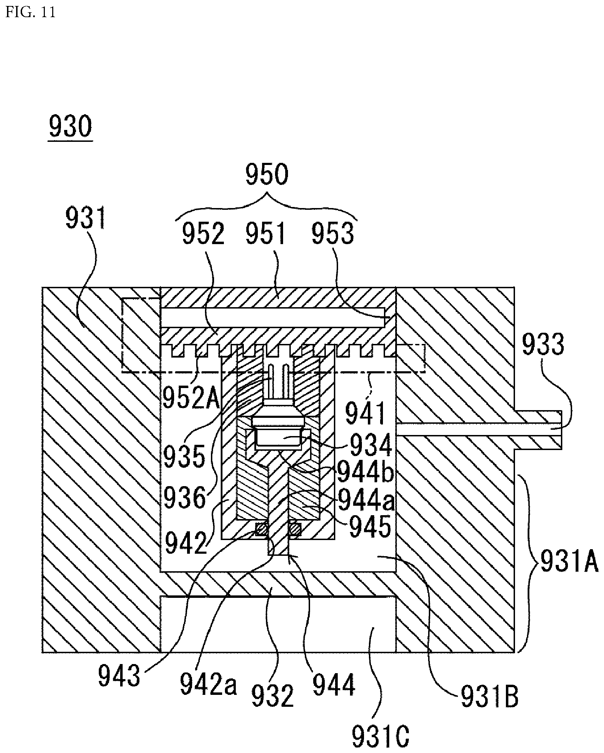

Next, a tenth embodiment of the present invention will be described in detail with reference to FIG. 11. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 11, a safety valve 930 is different from the safety valve 30 of the first embodiment mainly in that a power generation unit 950 is used as a current supply source to an igniter 934, a wiring 941 for transmitting a current generated in the power generation unit 950 is provided, a fixing member 936 is provided on an internal space 931B side of the power generation unit 950, the fixing member 936 is provided inside a cylindrical member 942, and the igniter 934 is provided inside the cylindrical member 942.

The power generation unit 950 is made of the same metal and includes a first portion 951 provided on an outer side, a second portion 952 provided on an inner side so as to face the first portion 951, and a connection portion 953 electrically connecting an end portion of the first portion 951 and an end portion of the second portion 952. Also, the second portion 952 has protrusions 952A on the internal space 931B side, and the power generation unit 950 is a heat sink.

The internal space 931B is formed by being surrounded by the main body 931 having a recess at the center and the power generation unit 950 provided to close the recess. In addition, the main body 931 and the power generation unit 950 also function as a protective portion that protects the second portion 952 from external heat.

Next, an operation of the safety valve 930 in the present embodiment will be described.

Referring to FIG. 11, when the high-pressure tank is exposed to an abnormally high temperature equal to or higher than a predetermined temperature, a temperature difference occurs between the first portion 951 and the second portion 952, and a current flows from the power generation unit 950 to the igniter 934 via the wiring 941 due to the Seebeck effect, and the igniter 934 activates. The flame generated by the activation of the igniter 934 is received by the receiving portion 944b of the piston member 944, and the piston member 944 receiving the energy of the flame moves to the openable portion 932 side. Thereafter, the tip portion of the rod-shaped portion 944a of the piston member 944 cleaves or breaks the openable portion 932 to form a pore portion. At this time, the heat reducing flame extinguishing agent 945 reduces the heat of the flame and extinguishes more flame than necessary. Subsequently, after the pore portion is formed in the openable portion 932, the piston member 944 is pushed back to the internal space 931B side by the pressure of the gas inside the tank main body. As a result, the gas filled in the tank main body is discharged to the external environment through the flow path formed by the pore portion, the internal space 931B, and the discharge port 933. Note that a filter circuit using a transistor protection circuit, a diode, or the like may be connected between the wiring 941 and the igniter 934 as necessary for the purpose of cutting off a current equal to or less than a certain current value. Accordingly, malfunction in an unintended situation can be prevented.

With the above configuration, the same functions and effects as those of the first embodiment can be exhibited. Further, since an external power source such as the power source 40 is not required, it is possible to reduce the weight of the safety valve 930 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Eleventh embodiment>

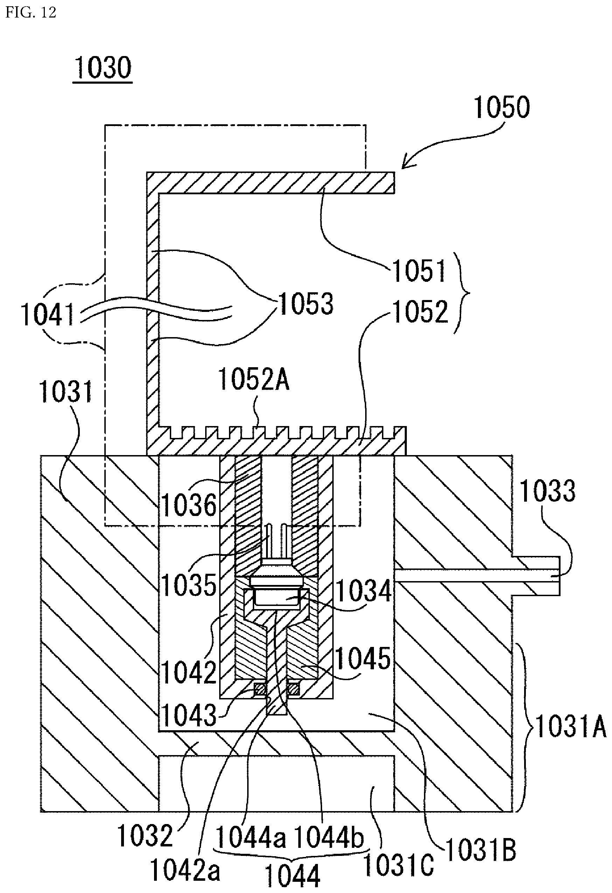

Next, an eleventh embodiment of the present invention will be described in detail with reference to FIG. 12. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As illustrated in FIG. 12, a safety valve 1030 is different from the safety valve 30 of the first embodiment mainly in that a power generation unit 1050 is used as a current supply source to an igniter 1034, a wiring 1041 for transmitting a current generated in the power generation unit 1050 is provided, a fixing member 936 is provided on an internal space 1031B side of the power generation unit 1050, the fixing member 1036 is provided inside a cylindrical member 1042, and the igniter 1034 is provided inside the cylindrical member 1042. In addition, as illustrated in FIG. 12, the safety valve 1030 is different from the safety valve 930 of the tenth embodiment mainly in that the power generation unit 850 having a portion provided apart from a main body 1031 (first portion 1051 to be described later) is used as a current supply source to the igniter 1034.

The power generation unit 1050 is made of the same metal, and includes the first portion 1051, a second portion 1052, and a connection portion 1053. The first portion 1051 is provided apart from the main body 1031, and the second portion 1052 is electrically connected to the first portion 1051 via the connection portion 1053. Also, the second portion 1052 has protrusions 1052A on the outer side, and the power generation unit 1050 is a heat sink. Note that the protrusions 1052 A may be provided on the inner side of the main body 1031.

The internal space 1031B is formed by being surrounded by the main body 1031 having a recess at the center and the second portion 1052 of the power generation unit 1050 provided to close the recess. In addition, the fixing member 1036 is provided on the igniter 1034 side of the second portion 1052 and supports the igniter 1034.

Next, an operation of the safety valve 1030 in the present embodiment will be described.

Referring to FIG. 12, when the first portion 1051 is exposed to an abnormally high temperature equal to or higher than a predetermined temperature, a temperature difference occurs between the first portion 1051 and the second portion 1052, and a current flows from the power generation unit 1050 to the igniter 1034 via the wiring 1041 due to the Seebeck effect, and the igniter 1034 activates. The flame generated by the activation of the igniter 1034 is received by the receiving portion 1044b of the piston member 1044, and the piston member 1044 receiving the energy of the flame moves to the openable portion 1032 side. Thereafter, the tip portion of a rod-shaped portion 1044a of the piston member 1044 cleaves or breaks the openable portion 1032 to form a pore portion. At this time, a heat reducing flame extinguishing agent 1045 reduces the heat of the flame and extinguishes more flame than necessary. Subsequently, after the pore portion is formed in the openable portion 1032, the piston member 1044 is pushed back to the internal space 1031B side by the pressure of the gas inside the tank main body. As a result, the gas filled in the tank main body is discharged to the external environment through the flow path formed by the pore portion, the internal space 1031B, and the discharge port 1033. Note that a filter circuit using a transistor protection circuit, a diode, or the like may be connected between the wiring 1041 and the igniter 1034 as necessary for the purpose of cutting off a current equal to or less than a certain current value. Accordingly, malfunction in an unintended situation can be prevented.

With the above configuration, the same functions and effects as those of the first embodiment can be exhibited. Further, since an external power source such as the power source 40 is not required, it is possible to reduce the weight of the safety valve 1030 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

<Twelfth embodiment>

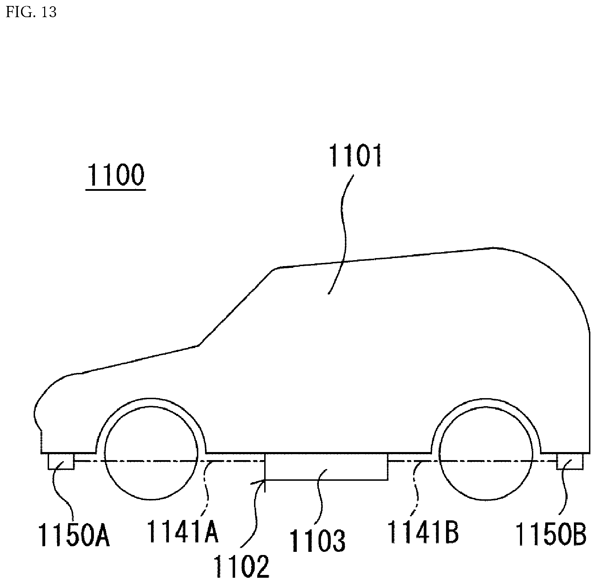

Next, a twelfth embodiment of the present invention will be described in detail with reference to FIG. 13. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

A vehicle 1100 includes a vehicle body 1101 and a high-pressure tank 1102 attached to a central portion of a lower portion of the vehicle body 1101. The high-pressure tank 1102 has a tank main body 1103. Although not illustrated, the tank main body 1103 is provided with a plurality of safety valves similar to the safety valve 830 shown in the ninth embodiment or the safety valve 1030 shown in the eleventh embodiment.

The safety valve has an igniter (not illustrated), power generation units 1150A and 1150B, and wirings 1141A and 1141B. The power generation unit 1150A is provided in a front portion of the lower portion of the vehicle body 1101, and the power generation unit 1150B is provided in a rear portion of the lower portion of the vehicle body 1101. In addition, similarly to the case of the safety valve 830 or the safety valve 1030, the power generation units 1150A and 1150B are electrically connected to the igniter via the wirings 1141A and 1141B. That is, the power generation units 1150A and 1150B are provided apart from the main body of the safety valve and the like.

Next, an operation of the safety valve in the present embodiment will be described. For the sake of convenience, an operation of the vehicle 1100 using the safety valve 1030 of the eleventh embodiment will be described as an example.

Referring to FIG. 13, when the power generation unit 1150A or the power generation unit 1150B in the vehicle 1100 is exposed to an abnormally high temperature equal to or higher than a predetermined temperature, a temperature difference occurs between the first portion 1051 and the second portion 1052, a current flows from the power generation unit 1050 to the igniter 1034 via the wiring 1041 due to the Seebeck effect, and the igniter 1034 activates, as in the eleventh embodiment. Referring to FIG. 12, the flame generated by the activation of the igniter 1034 is received by the receiving portion 1044b of the piston member 1044, and the piston member 1044 receiving the energy of the flame moves to the openable portion 1032 side. Thereafter, the tip portion of the rod-shaped portion 1044a of the piston member 1044 cleaves or breaks the openable portion 1032 to form a pore portion. At this time, the heat reducing flame extinguishing agent 1045 reduces the heat of the flame and extinguishes more flame than necessary. Subsequently, after the pore portion is formed in the openable portion 1032, the piston member 1044 is pushed back to the internal space 1031B side by the pressure of the gas inside the tank main body 1103. As a result, the gas filled in the tank main body 1103 is discharged to the external environment through the flow path formed by the pore portion, the internal space 1031B, and the discharge port 1033.

With the above configuration, the same functions and effects as those of the first embodiment can be exhibited. Further, since an external power source such as the power source 40 is not required, it is possible to reduce the weight of the safety valve 1030 as compared with the case of using the safety valve 30 of the first embodiment. Furthermore, even in a state where no current is supplied to the control or sensor such as when the vehicle is stopped, it is possible to detect a fire (detect an abnormality) and safely activate the safety valve.

In addition to the power generation units 1150A and 1150B, another power generation unit similar to the power generation units 1150A and 1150B may be provided at an arbitrary location of the vehicle body, and another power generation unit may be electrically connected to the igniter via a wiring.

<Thirteenth embodiment>

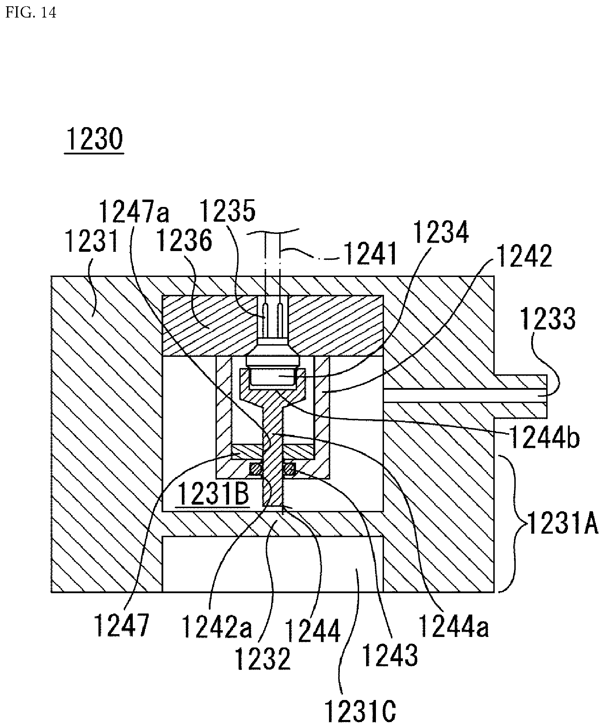

Next, a thirteenth embodiment of the present invention will be described in detail with reference to FIG. 14. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As shown in FIG. 14, a safety valve 1230 is different from the safety valve 30 of the first embodiment mainly in that a flame extinguishing member 1247 is provided inside a bottom portion of a cylindrical member 1242 instead of the heat reducing flame extinguishing agent 45 in the first embodiment.

The flame extinguishing member 1247 has a pore portion 1247a through which 1244a passes at the center. The flame extinguishing member 1247 is, for example, a metal crimped ribbon element (one in which a pleated metal plate and a flat metal plate are alternately superposed and spirally wound to have many minute triangular cross-sectional spaces), one made of a metal mesh material using a metal network, a metal wire, or the like, one made of sintered metal (porous metal), or a member having a flame extinguishing function such as an O-ring (generally referred to as a frame arrester or the like). Here, in the O-ring, grease (silicone grease, heat resistant grease, or the like is preferable from the viewpoint of flame resistance.) may be applied to the surface as necessary.

With the above configuration, the safety valve 1230 in the present embodiment can exhibit the same functions and effects as those of the first embodiment.

Also in each of the other embodiments, as in the present embodiment, a member similar to the flame extinguishing member 1247 can be used instead of the heat reducing flame extinguishing agent. Further, the flame extinguishing member may be provided at any position inside the cylindrical member as long as the flame extinguishing member can exhibit the flame extinguishing function and does not interfere with the movement of the piston member at the time of activation. Furthermore, a flame extinguishing agent may be further disposed in at least a part of the cylindrical member 1242 in order to extinguish the flame generated by the igniter or the AI agent at the time of activation. That is, the safety valve may be configured to extinguish the flame generated at the time of activation using the flame extinguishing member and the flame extinguishing agent.

<Fourteenth embodiment>

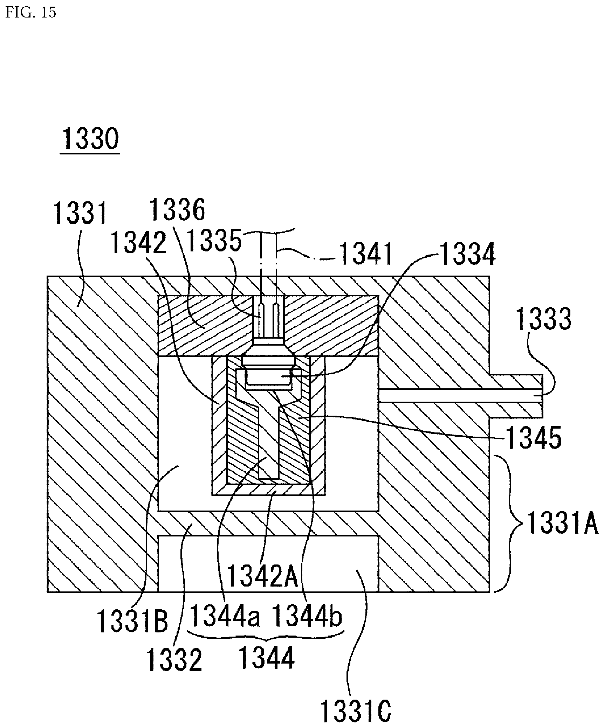

Next, a fourteenth embodiment of the present invention will be described in detail with reference to FIG. 15. Since the high-pressure tank of the present embodiment is substantially the same as that of the first embodiment, the description and illustration of the same parts are omitted unless otherwise specified. In addition, those in which the last two digits of the reference numerals in the present embodiment are coincident with the reference numerals in the above embodiment are the same unless otherwise specified, and thus the description thereof will be omitted.

As shown in FIG. 15, a safety valve 1330 is different from the safety valve 30 of the first embodiment mainly in that a bottomed cylindrical member 1342 having no pore portion at the bottom portion is used instead of the cylindrical member 42 in the first embodiment.

The bottom portion 1342A of the cylindrical member 1342 is opened (cleaved or broken) by a tip portion of a rod-shaped portion 1344a of a piston member 1344 at the time of activation of the safety valve 1330. In addition, at the time of activation of the safety valve 1330, an openable portion 1332 is opened (cleaved or broken) by the tip portion of the rod-shaped portion 1344a of the piston member 1344 following the opening of the bottom portion 1342A of the cylindrical member 1342.

With the above configuration, the safety valve 1330 in the present embodiment can exhibit the same functions and effects as those of the first embodiment.

Although the embodiments of the present invention have been described above, these are merely specific examples, and the present invention is not particularly limited, and the specific configuration and the like can be modified in design as appropriate. In addition, the actions and effects described in the embodiments of the present invention merely enumerate the most suitable actions and effects resulting from the present invention, and the actions and effects according to the present invention are not limited to those described in the embodiments of the present invention.

For example, when the gas discharged from the discharge port of the safety valve of each embodiment is flammable gas, the gas is preferably discharged toward the ground side. Therefore, a pipe or the like that regulates the discharge direction of the gas discharged from the safety valve to the ground side may be appropriately provided in the discharge port. However, in particular, in the case of a gas that does not ignite, the discharge port may be provided in an appropriate direction as long as the human body or the like is not affected.

In addition, the second member 231b and the third member 231c in the third embodiment may be formed of a material that is soluble when the ambient temperature of the high-pressure tank becomes high temperature (abnormally high temperature) due to an external fire or the like (for example, an alloy of a metal obtained by combining two or more of lead, tin, bismuth, indium, and antimony) and the like. As a result, when a fire occurs outside and heat is conducted, the second member 231b and the third member 231c are in a fragile state, and the openable portions 232A and 232B are easily opened (cleaved or broken) at the time of activation of the safety valve 230. At this time, the openable portions 232A and 232B can be opened with a smaller amount of the ignition charge 234A than in the case of the third embodiment.

Further, in each of the above embodiments, the safety valve activates at an abnormally high temperature, but the present invention is not limited thereto. The activation of each safety valve may be based on a command signal from an electronic control unit (ECU) generated when an abnormality is detected by a sensor or the like. For example, each safety valve may be activated by a command signal output from the ECU when a collision is detected by a sensor or the like.

Furthermore, as the shape of the power generation unit that generates power by the Seebeck effect of the above embodiment and modifications (in particular, the shape of one formed of one type of metal), various shapes such as a layered shape, a plate shape, a rod shape, a linear shape, and a combination of these shapes can be adopted.

Moreover, in the tenth and eleventh embodiments, the power generation unit is formed of one type of metal, but the present invention is not limited thereto. For example, a power generation unit using metals having different Seebeck coefficients for the first portion and the second portion may be used.

For example, in each embodiment, the openable portion of the safety valve on the tank main body side is cleaved by the piston member at the time of activation to form a pore portion, but the present invention is not limited thereto. For example, instead of the piston member of each embodiment, the flame extinguishing member used in the thirteenth embodiment may be provided inside or outside the bottom portion of the cylindrical member so as to cover the pore portion or inside the pore portion, so that the flame of the igniter is extinguished at the time of activation, the openable portion of the safety valve on the tank main body side is broken or cleaved only by the pressure wave of the flame (flame extinguished) from the pore portion of the bottom portion, and the gas filled in the tank main body is discharged to the external environment.

The O-ring itself provided in the pore portion of the bottom portion of the cylindrical member may have a flame extinguishing function without using the flame extinguishing agent in the first to twelfth embodiments or the flame extinguishing member in the thirteenth embodiment. Here, in the O-ring, grease (silicone grease, heat resistant grease, or the like is preferable from the viewpoint of flame resistance.) may be applied to the surface as necessary.

Further, the respective parts of the above embodiments and modifications may be appropriately combined as necessary.

REFERENCE SIGNS LIST

10, 110, 210, 1103 tank main body
10a space
11, 12, 112, 212 opening
20 valve
21 supply port
30, 130, 230, 330, 430, 530, 630, 730, 830, 930, 1030, 1230, 1330 safety valve
31, 131, 231, 331, 431, 531, 631, 731, 831, 931, 1031, 1231, 1331 main body
31A, 131A, 231A, 331A, 431A, 531A, 631A, 731A, 831A, 931A, 1031A, 1231A, 1331A male threaded portion
31B, 131B, 238, 331B, 431B, 531B, 631B, 731B, 831B, 837A, 931B, 1031B, 1231B, 1331B internal space
31C, 131C, 231C, 331C, 431C, 531C, 631C, 931C, 1031C, 1231C, 1331C hole portion
32, 132, 232A, 232B, 332, 432, 532, 632, 732, 832, 932, 1032, 1232, 1332 openable portion
33, 133, 233, 333, 433, 533, 633, 733, 833, 933, 1033, 1233, 1333 discharge port
34, 134, 334, 534, 634, 734, 834, 934, 1034, 1234, 1334 igniter
35, 135, 335, 535, 635, 735, 835, 935, 1035, 1235, 1335 terminal pin
36, 136, 336, 536, 736, 836, 936, 1036, 1236, 1336 fixing member
40 power source
41, 141, 341, 541, 641, 741, 841, 941, 1041, 1141A, 1141B, 1241, 1341 wiring
42, 142, 242, 342, 442, 542, 642, 742, 842, 942, 1042, 1242 cylindrical member
234B, 434B Al agent
100, 1102 high-pressure tank
42a, 132a, 532a, 142a, 232A1, 232B1, 242a, 342a, 442a, 542a, 642a, 742a, 842a, 942a, 1042a, 1242a, 1247a pore portion
43, 137, 143, 237, 243, 343, 443, 543, 643, 650, 743, 843, 943, 1043, 1243
O-ring
44, 144, 244, 344, 444, 544, 644, 744, 844, 944, 1044, 1244, 1344 piston member
44a, 144a, 244a, 344a, 444a, 544a, 644a, 744a, 844a, 944a, 1044a, 1244a, 1344a rod-shaped portion
44b, 144b, 244b, 344b, 444b, 544b, 644b, 744b, 844b, 944b, 1044b, 1244b, 1344b receiving portion
45, 145, 245, 345, 445, 545, 645, 745, 845, 945, 1045, 1245, 1345 heat reducing flame extinguishing agent
231B1, 231B2, 231C1, 231C2 recess
231a first member
231b second member
231c third member
234, 434 opening means
234A ignition charge

238 filter
350, 750, 850, 950, 1050, 1150A, 1150B power generation unit
351 first metal layer
352 semiconductor layer
353 second metal layer
434A plate-like pedestal
434C pin member
536a cylinder portion
544c enlarged diameter portion
651, 737a, 737b, 837a, 837b through hole
737 lid portion
752A, 852A first semiconductor
752B, 852B second semiconductor
754, 755A, 755B, 855A, 855B conductive member
837 protective portion
951, 1051 first portion
952, 1052 second portion
953, 1053 connection portion
1100 vehicle
1101 vehicle body
1342A bottom portion

## Claims

1. A safety valve for a high-pressure tank that can be connected to an opening of a tank main body filled with a fluid, the safety valve comprising:

   a main body having a discharge port that comes into contact with an external environment, and a flow path capable of communicating the opening and the external environment via the discharge port; and
   a valve that is provided at any position of the flow path, closes the flow path at a normal time, and opens the flow path at an abnormally high temperature or abnormality detection, wherein
   the valve has an openable portion that is opened by driving of opening means provided in the flow path,
   the opening means is provided on the downstream side of the openable portion in the flow path and opens the openable portion using energy obtained by ignition of explosive as a drive source, and
   the valve is provided with flame-extinguishing means against a flame generated by the ignition of explosive when the opening means is driven.

2. The safety valve for a high-pressure tank according to claim 1, wherein

   the explosive in the opening means is an igniter that activates when a current flows or an auto-ignition agent that automatically ignites at a predetermined temperature or higher, and
   the flame-extinguishing means is a flame extinguishing agent or a flame extinguishing member that extinguishes a flame generated at the time of activating the igniter or the auto-ignition agent,
   the safety valve further comprising: a cylindrical member in which the igniter or the auto-ignition agent is disposed on one end side and a bottom portion in which a pore portion is formed is provided on the other end side; and a piston member at least a part of which is provided inside the cylindrical member, the piston member that is provided in a state of penetrating the pore portion in an initial state, and is slid in a penetrating direction of the pore portion by a pressure wave obtained by ignition of the igniter or automatic ignition of the auto-ignition agent when the igniter or the auto-ignition agent activates to open the openable portion, and
   the flame-extinguishing means is provided at least partially between an inner wall of the cylindrical member and the piston in the cylindrical member.

3. The safety valve for a high-pressure tank according to claim 1, wherein

   the explosive in the opening means is an igniter that activates when a current flows or an auto-ignition agent that automatically ignites at a predetermined temperature or higher, and
   the flame-extinguishing means is a flame extinguishing agent or a flame extinguishing member that extinguishes a flame generated at the time of activating the igniter or the auto-ignition agent,
the safety valve further comprising: a cylindrical member in which the igniter or the auto-ignition agent is disposed on one end side and having a bottom portion on the other end side; and a piston member that is provided inside the cylindrical member, and is slid to the other end side of the cylindrical member by a pressure wave obtained by ignition of the igniter or automatic ignition of the auto-ignition agent when the igniter or the auto-ignition agent activates to sequentially open the bottom portion of the cylindrical member and the openable portion, and
the flame-extinguishing means is provided at least partially between an inner wall of the cylindrical member and the piston in the cylindrical member.

4. The safety valve for a high-pressure tank according to claim 1, wherein

the explosive in the opening means is an igniter that activates when a current flows or an auto-ignition agent that automatically ignites at a predetermined temperature or higher, and
the flame-extinguishing means is a flame extinguishing member that extinguishes a flame generated at the time of activating the igniter or the auto-ignition agent,
the safety valve further comprising: a cylindrical member in which the igniter or the auto-ignition agent is disposed on one end side and a bottom portion in which a pore portion is formed is provided on the other end side,
the flame extinguishing member is disposed inside or outside the cylindrical member or inside the pore portion so as to cover the pore portion, and
the openable portion is broken or cleaved by a pressure wave obtained after the flame is extinguished by the flame extinguishing member.

5. The safety valve for a high-pressure tank according to claim 4, wherein

the flame-extinguishing means further comprises a flame extinguishing agent,
the flame extinguishing agent is disposed in at least a part of the inside of the cylindrical member, and
the openable portion is broken or cleaved by a pressure wave obtained after the flame is extinguished by the flame extinguishing member and the flame extinguishing agent.

FIG. 1

FIG. 2

FIG. 3

(a)

(b)

FIG. 4

(a)

(b)

(c)

FIG. 5

FIG. 6

FIG. 7

(a)

(b)

FIG. 8

(a)

(b)

FIG. 9

FIG. 10

FIG. 11

FIG. 12

FIG. 13

1100   1101

1150A   1141A   1103   1141B   1150B

1102

FIG. 14

FIG. 15

## INTERNATIONAL SEARCH REPORT

| International application No. |
| --- |
| **PCT/JP2024/030111** |

| A. | CLASSIFICATION OF SUBJECT MATTER |
| --- | --- |

*F16K 17/40*(2006.01)i; *F17C 13/12*(2006.01)i
FI:  F16K17/40 A; F17C13/12 301A

According to International Patent Classification (IPC) or to both national classification and IPC

| B. | FIELDS SEARCHED |
| --- | --- |

Minimum documentation searched (classification system followed by classification symbols)

F16K17/40; F17C13/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2016-205617 A (KIDDE GRAVINER LIMITED) 08 December 2016 (2016-12-08) paragraphs [0039]-[0049], fig. 1-2 | 1-5 |
| A | US 2006/0137742 A1 (SMITH, Bradley W.) 29 June 2006 (2006-06-29) paragraphs [0030]-[0034], fig. 7-9 | 1-5 |
| A | JP 2013-76433 A (HONDA MOTOR CO., LTD.) 25 April 2013 (2013-04-25) paragraphs [0030]-[0071], fig. 1-5 | 1-5 |
| P, X | WO 2023/171368 A1 (NIPPON KAYAKU KABUSHIKI KAISHA) 14 September 2023 (2023-09-14) paragraphs [0046]-[0055], fig. 4 | 1 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 October 2024** | **05 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/030111**

| Patent document cited in search report | | | Publication date (day/month/year) | Patent family member(s) | | | Publication date (day/month/year) |
|---|---|---|---|---|---|---|---|
| JP | 2016-205617 | A | 08 December 2016 | US | 2016/0303409 | A1 | |
| | | | | paragraphs [0043]-[0053], fig. 1-2 | | | |
| | | | | GB | 2537414 | A | |
| | | | | EP | 3081267 | A1 | |
| | | | | CA | 2926410 | A1 | |
| | | | | CN | 106051252 | A | |
| US | 2006/0137742 | A1 | 29 June 2006 | (Family: none) | | | |
| JP | 2013-76433 | A | 25 April 2013 | (Family: none) | | | |
| WO | 2023/171368 | A1 | 14 September 2023 | JP | 2023-131750 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5007809 B